# EUROPEAN PATENT APPLICATION

(11) **EP 3 842 909 A1**
(43) Date of publication of application: **30.06.2021**
(21) Application number: 19932133.2
(22) Date of filing: 05.09.2019
(51) Int. Cl.: G06F 3/0483, G06F 3/0488

(54) **BOOK DISPLAY PROGRAM AND BOOK DISPLAY DEVICE**

(30) Priority: 07.06.2019 JP 2019107500
(60) Divisional application: 21165714.3
(71) Applicant: Celsys, Inc., Tokyo 160-0023 (JP)
(72) Inventor: YOKOTSUKA Tomoaki, Tokyo 160-0023 (JP); FURUSHIMA Shusaku, Tokyo 160-0023 (JP)
(74) Representative: Regimbeau
(86) International application number: PCT/JP2019/035072
(87) International publication number: WO 2020/246052

(57) **Abstract**

The disclosed technique provides a book display program which causes a computer to execute instructions comprising: receiving a command to change a display image of a virtual book displayed on a display unit from an operator, the book including a content; generating display control information to be applied to the display unit and used to control transition of the display image of the book; and three-dimensionally or two-dimensionally displaying the book based on the display control information. The generating display control information includes: obtaining a display state of the book; and selecting one of command conversion rules based on at least the display state, the one command conversion rule selected to be applied to the received command and used to generate the display control information.

## Description

### [Technical Field]

The present invention relates to a book display program which displays a book on a display device and to a book display device.

### [Background Art]

Conventionally, there has been a technique of two-dimensionally or three-dimensionally displaying a book on display screens of a computer, a mobile terminal, and the like.

For example, the following techniques can be given as specific examples.

One of the techniques is to control a display system in a case where a specified number of virtual pages are split from one of two three-dimensional virtual objects and are turned and merged with the other three-dimensional virtual object. Here, the other three-dimensional virtual object is referred to as first three-dimensional virtual object. A three-dimensional virtual object formed of virtual pages remaining in the one three-dimensional virtual object after the specified number of virtual pages are split therefrom is referred to as second three-dimensional virtual object. A three-dimensional virtual object formed of the specified number of virtual pages is referred to as third three-dimensional virtual object. The third three-dimensional virtual object is moved from the second three-dimensional virtual object to the first three-dimensional virtual object as if the virtual pages are turned. In the movement of the third three-dimensional virtual object, the following states are maintained: two virtual pages of a spread are connected to each other at a first reference line; and two virtual pages of the third three-dimensional virtual object and the second three-dimensional virtual object which form a new spread as a result of the moving of the third three-dimensional virtual object to the position of the first three-dimensional virtual object are connected at a second reference line. Moreover, a plane of the virtual page of the first three-dimensional virtual object in the spread moves away from a virtual plane and a plane of the virtual page of the second three-dimensional virtual object in the new spread approaches the virtual plane. When the movement of the third three-dimensional virtual object to the position of the first three-dimensional virtual object is completed, the planes of the two virtual pages of the third three-dimensional virtual object and the second three-dimensional virtual object which form the new spread faces the virtual plane (for example, see Patent Literature 1).

Moreover, another one of the techniques is as follows. A first turning boundary spanning the first and second pages is defined. The first turning boundary is defined by an arc having a radius defined by a distance between a first location and a top location of a shared boundary. The top location is located at the center of the arc defining the first turning boundary. A second turning boundary spanning the first and second pages is defined. The second turning boundary is defined by an arc having a radius defined by a distance between the first location and a bottom location of the shared boundary. The bottom location is located at the center of the arc defining the second turning boundary. The first and second turning boundaries intersect to define a turning area. A movement of a pointer from the first location to a second location within the turning area is traced. A visual effect of bending the second page boundary along the traced movement from the first location to the second location is produced (for example, see Patent Literature 2).

### [Citation List]

### [Patent Literature]

Patent Literature 1: Japanese Patent No. 4761764
Patent Literature 2: Japanese Patent No. 5992934

### [Summary of Invention]

### [Technical Problem]

The aforementioned conventional techniques belong to a field of displaying a virtual image of an actually-existing book and focus on faithfully reproducing the book on a screen as if the actual book is viewed. Accordingly, the technology has not yet reached the level of virtual display of a book with sufficient consideration to enable a user to read a book easily and to solve unique problems due to the particularity of displaying a book in a virtual space.

An object of the disclosed technique is to further improve convenience in reading of a virtual book displayed on a display screen by allowing the user to easily handle the virtual book in a virtual space.

### [Solution to Problem]

The disclosed technique provides a book display program which causes a computer to execute instructions comprising: receiving a command to change a display image of a virtual book displayed on a display unit from an operator, the book including a content; generating display control information to be applied to the display unit and used to control transition of the display image of the book; and three-dimensionally or two-dimensionally displaying the book based on the display control information. The generating display control information includes: obtaining a display state of the book; and selecting one of command conversion rules based on at least the display state, the one command conversion rule selected to be applied to the received command and used to generate the display control information.

### [Advantageous Effects of Invention]

The disclosed technique can further improve convenience in reading of a virtual book displayed on a display screen by allowing the user to easily handle the virtual book in a virtual space.

### [Brief Description of Drawings]

[Figs. 1A and 1B] Fig. 1A illustrates an example in which a book is three-dimensionally displayed on a screen of a computer or the like and Fig. 1B illustrates an example in which one page of the book is displayed on a portrait-oriented screen of a mobile terminal or the like.
[Fig. 2] Fig. 2 illustrates a block diagram of a book display device configured to two-dimensionally or three-dimensionally display a book.
[Fig. 3] Fig. 3 illustrates hardware configurations which execute a book display program to implement the book display device.
[Fig. 4] Fig. 4 is a flowchart illustrating an outline of operations of the book display program.
[Fig. 5] Fig. 5 is a flowchart illustrating an example of generation of display control information.
[Figs. 6A and 6B] Figs. 6A and 6B are views illustrating an example of how the content of the book is displayed in an enlarged manner.
[Fig. 7] Fig. 7 is a flowchart of processing performed when the content of the book is displayed at a predetermined magnification ratio or more.
[Fig. 8] Fig. 8 is a view illustrating an example of how page turning is displayed.
[Fig. 9] Fig. 9 is a flowchart of processing of the page turning performed when the book is displayed as a spread.
[Figs. 10A and 10B] Figs. 10A and 10B are views illustrating an example of page display control performed when one page is displayed on a portrait-oriented display device.
[Fig. 11] Fig. 11 is a view illustrating an example of a direction of a virtual visual line in the case where one page is displayed.
[Fig. 12] Fig. 12 is a flowchart illustrating an example of processing in the page turning performed when one page is displayed on the screen.
[Figs. 13A and 13B] Figs. 13A and 13B are views illustrating an example of a user interface used when an instruction of the page turning is given and when an instruction of the book turning is given.
[Fig. 14] Fig. 14 is a flowchart illustrating an example of processing of displaying the book such that the book is three-dimensionally turned.
[Figs. 15A and 15B] Fig. 15A and 15B are views of one page is displayed in a tilted direction.
[Fig. 16] Fig. 16 is a flowchart illustrating an example of the processing performed when the previous or next page of one page is to be displayed before the one page is displayed as viewed in the tilted direction.
[Figs. 17A and 17B] Figs. 17A and 17B are views illustrating examples of the case where the entire book is displayed and the case where a portion of the content of the book is substantially entirely displayed.
[Fig. 18] Fig. 18 is a flowchart illustrating an example of the processing of displaying the previous or next page when the portion of the content of the book is substantially entirely displayed.
[Fig. 19] Fig. 19 is a view illustrating an example of a mode in which the book is displayed as a spread on a landscape-oriented display screen.
[Fig. 20] Fig. 20 is a flowchart illustrating an example in which a mode is switched to a mode of double-page spread depending on detection of the aspect ratio of the display screen.
[Fig. 21] Fig. 21 is a flowchart illustrating an example of display control performed when the mobile terminal is moving substantially parallel to the screen.
[Fig. 22] Fig. 22 is a view illustrating an example of displaying the book in the mode of double-page spread when the content spanning across the left and right pages is displayed.
[Fig. 23] Fig. 23 is a flowchart illustrating an example of displaying the book in the mode of double-page spread when the content spanning across the left and right pages is displayed.

### [Description of Embodiment]

An embodiment is described below with reference to the drawings. Note that elements in a method and a program can be executed with their orders changed as long as there is no contradiction. Moreover, each element can be executed in parallel with another element. Furthermore, not all elements are necessary and some of the elements may be eliminated or not executed as long as there is no contradiction. Moreover, the elements may be executed by an operating system or a hardware. Furthermore, the program may be stored in a tangible medium and distributed.

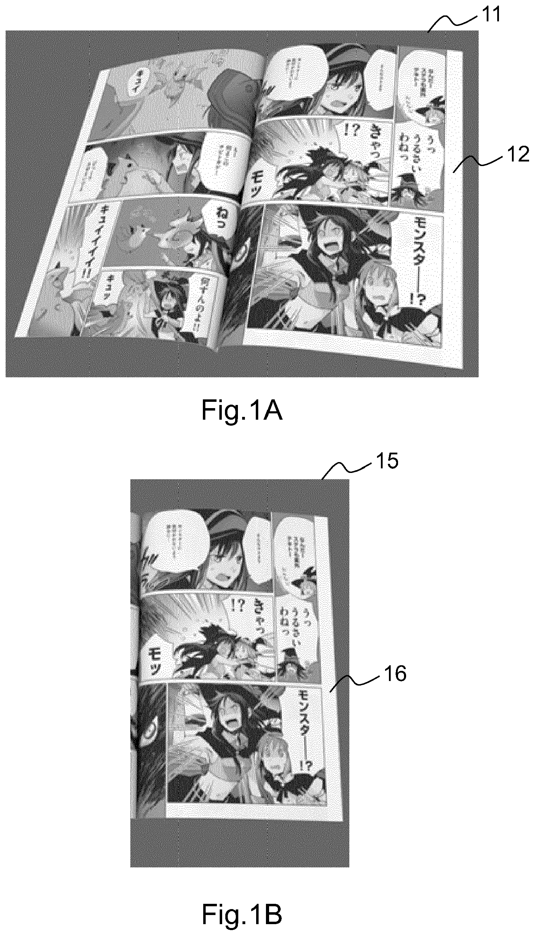

Fig. 1A illustrates an example in which a virtual book 12 is three-dimensionally displayed on a screen 11 of a computer or the like. Fig. 1B illustrates an example in which a page 16 on one side of the virtual book is displayed on a portrait-oriented screen 15 of a mobile terminal or the like.

Three-dimensionally displaying a book on a display screen as described above allows a user to read the book as in reading of an actual book.

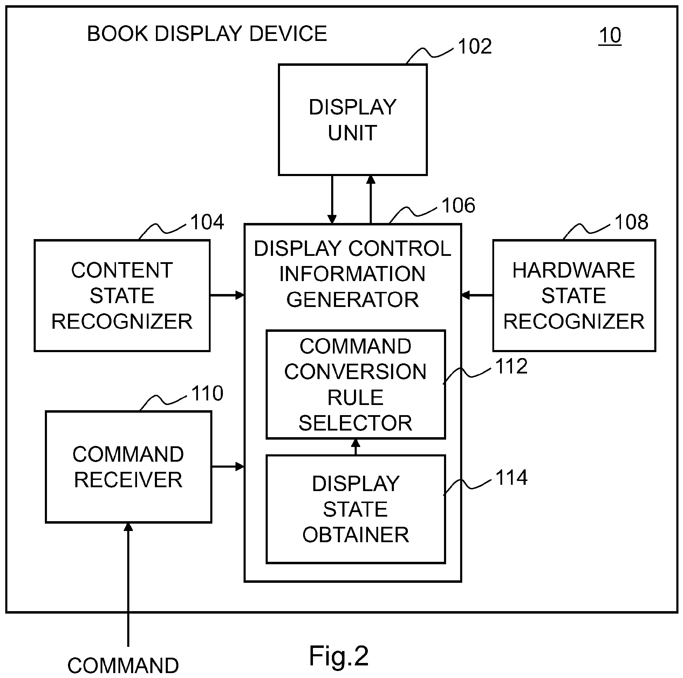

Fig. 2 illustrates a block diagram of a book display device 10.

The book display device 10 includes a display unit 102, a content state recognizer 104, a display control information generator 106, a command receiver 110, and a hardware state recognizer 108. Moreover, the display control information generator 106 includes a display state obtainer 114 and a command conversion rule selector 112.

The display unit 102 two-dimensionally or three-dimensionally displays a virtual book with a content.

The content state recognizer 104 recognizes content states. For example, the content state recognizer 104 recognizes content states such as whether there is a frame of a comic spanning across left and right pages of a spread of an opened book, whether the content includes a video, and whether the content includes a moving image. The display control information generator 106 can select an appropriate display rule based on this recognition result. Alternatively, additional display control information may be generated for the display rule.

The display control information generator 106 can control a display image of the virtual book to be displayed on the display unit 102 by generating display control information relating to the display image of the virtual book and providing the generated display control information to the display unit 102.

The command receiver 110 receives commands from a user operating the book display device, a user in a remote location, a server device to which the book display device 10 is connected via a network, and the like. The received commands are sent to the display control information generator 106 and are used for the generation of the display control information relating to displaying of the virtual book. Moreover, the display control information may be generated according to the received commands based on a command conversion rule selected by the command conversion rule selector 112.

The hardware state recognizer 108 recognizes states of a device such as a mobile terminal, a tablet, or a laptop or a computer such as a desktop personal computer having the display unit. For example, the hardware state recognizer 108 recognizes a hardware states such as whether the mobile terminal is in a portrait-oriented state or a landscape-oriented state by utilizing information of a gyroscope sensor of the mobile terminal and the like. Moreover, the hardware state recognizer 108 recognizes the hardware states such as whether a display of the desktop personal computer is in the portrait-oriented state or the landscape-oriented state by utilizing information of a sensor in a desktop display and the like. The recognized states are sent to the display control information generator 106.

Moreover, the display state obtainer 114 included in the display control information generator 106 can recognize display states such as, for example, whether the book is displayed as a spread, whether only one of left or right pages is displayed, whether the book is displayed as viewed in a tilted direction, and whether a content portion of the book is displayed in an enlarged manner. The display state obtainer 114 can obtain the display states by monitoring the display control information or display information of the book displayed on the display unit 102.

Moreover, the command conversion rule selector 112 included in the display control information generator 106 selects an appropriate command conversion rule from multiple command conversion rules based on various pieces of information, the command conversion rules used to convert the commands from the user to the display control information. Note that the display control information may be generated based not only on outputs obtained according to the command conversion rule but also on various states. Note that, although specific commands are described in the following embodiment, these commands are examples and other commands similar to the commands given as examples may be used as a matter of course.

The book display device 10 configured as described above can display a virtual book based on appropriate display control information while considering the commands of the user, the hardware states, the content states, the display states, and the like.

More detailed operations of the book display device 10 are the same as operations explained by using a case example and a processing flow. Specifically, since the more detailed operations of the book display device 10 are the same as the following description explaining the method and the program, description of the detailed operations of the book display device 10 is omitted to avoid overlapping explanation.

### <Hardware Configurations>

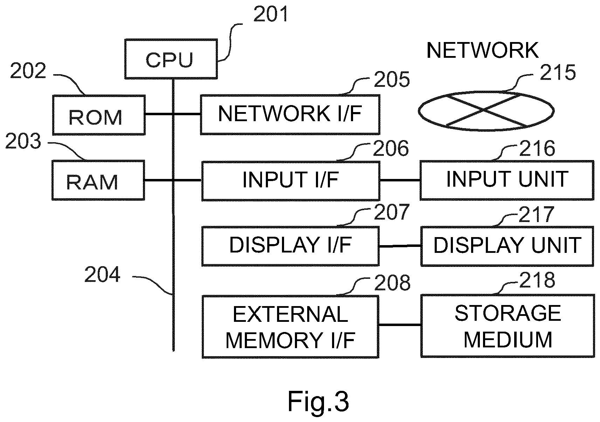

Fig. 3 is a view illustrating each hardware configurations in embodiments. The hardware configurations include a CPU 201, a ROM 202 and a RAM 203 in which the program and data of the embodiment are stored, a network interface 205, an input interface 206, a display interface 207, and an external memory interface 208. These pieces of hardware are connected to each other by a bus 204.

The network interface 205 is connected to a network 215. The network 215 includes a wired LAN, a wireless LAN, the Internet, a phone network, and the like. An input unit 216 is connected to the input interface 206. A display unit 217 is connected to the display interface 207. A storage medium 218 is connected to the external memory interface 208. The storage medium 218 may be a RAM, a ROM, a CD-ROM, a DVD-ROM, a hard disk, a memory card, a USB memory, or the like.

The program and the method for implementing the aforementioned embodiment can be executed by a computer including the hardware configurations illustrated in Fig. 3. Specifically, the program of the embodiment may be implemented as a method to be executed by a computer. The program of the embodiment may be partially or entirely executed by an operating system. Moreover, the program may be partially implemented by hardware. The program may be stored in the storage medium 218, the ROM 202, or the RAM 203.

The embodiments may be implemented as a hardware device.

The embodiments disclosed in this application do not limit the invention described in the claims and are handled as examples as a matter of course.

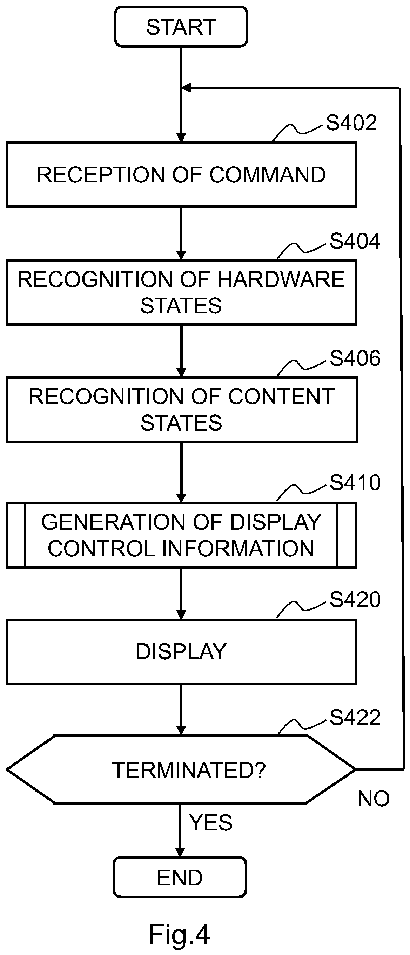

Fig. 4 is a flowchart illustrating an outline of operations of a book display program. Steps are described below. Note that this flow is repeatedly executed until termination is recognized in step S422. Accordingly, the display state of the screen changes based on the past display state.

[S402] The book display program receives a command from a user who is an operator. Examples of the command include tap, flick, tracing, pinch-in, pinch-out, and the like on a touch panel provided on the display screen. Moreover, the examples of the command include click, drag, drop, and the like with a mouse. Furthermore, the examples of the command include voice, sounds, a sound made by tapping a housing with the finger or the like, and the like. Moreover, the examples of the command include a button operation, a key operation, and the like. Note that the command is not limited to the aforementioned examples.

Although the examples of the command are described above, all of the examples listed in the case example of the present application are examples and do not limit the present invention.

The processing flow proceeds to step S404.

[S404] The book display program recognizes the hardware states. Examples of the hardware states include the following states.

The aspect ratio of the mobile terminal is an aspect ratio of the landscape-oriented state.

The mobile terminal is slightly vibrating parallel to the display screen.

The display terminal is assumed to be a laptop, a desktop, a smartphone, a tablet, or the like from the aspect ratio of the display screen.

The set language of the operating system installed in the hardware is English.

These states are the examples of the hardware states. As described above, the state of a basic program such as the operating system may be also detected. The processing flow proceeds to step S406.

[S406] The book display program recognizes the content states. Examples of the content states include the following states.

A content of left and right pages of an opened book is a content having one meaning across two pages (for example, one frame in a comic or the like drawn over two pages).

A video is embedded in the content of the opened page.

A display effect is embedded in the content of the opened page.

A content generating sound is included in the opened page.

The recognition of the content may be achieved by analyzing the content or by including identifiers, flags, or the like corresponding to the content states in the content in advance. The processing flow proceeds to step S410.

[S410] The book display program generates the display control information based on the display states, the hardware states, the content states, and the like obtained in the aforementioned steps.

[S420] The book with the content is displayed on the display screen based on the display control information. The processing flow proceeds to step S422.

[S422] The book display program checks whether the processing is to be terminated. The processing is terminated in response to, for example, an explicit instruction of termination processing made by the operator. Alternatively, the termination of the processing may be triggered by execution of a menu operation or the like. When the result of this check is YES, the processing is terminated. When the result of this check is NO, the processing flow returns to step S402.

The flow of the outline of the processing is as described above.

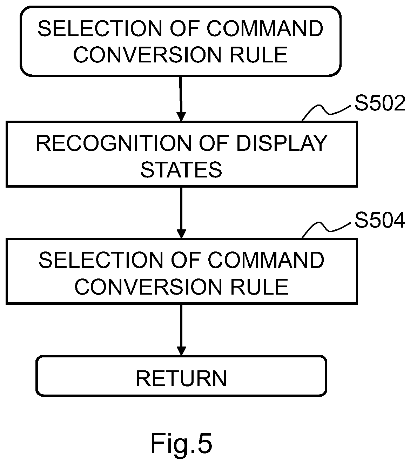

Fig. 5 is a flowchart illustrating an example of the generation of the display control information. The flow of Fig. 5 can be executed in the processing of selecting the command conversion rule in the execution of the step S410 (generation of the display control information) in Fig. 4.

[S502] The book display program obtains the display states of the displayed virtual book. The display states can be obtained by, for example, monitoring the display control information successively. Examples of the display states include the following states.

The entire book is displayed as a spread.

One of the left and right pages of the book is substantially entirely displayed and the other page is partially displayed.

A page is displayed as viewed in a direction of a line extending substantially perpendicular to a surface of the book.

A page is displayed as viewed in a direction tilted with respect to the surface of the book.

The processing flow proceeds to step S504.

[S504] The book display program selects the command conversion rule used to convert the received command to the display control information. The command conversion rule may be determined in advance and there are multiple command conversion rules. The command conversion rule may be selected from the multiple command conversion rules depending on the display states, the hardware states, the content states, and the like. Alternatively, the display control information outputted based on the command conversion rule selected depending on the recognized display states may be corrected depending on the hardware states, the content states, and the like.

When the processing of step S504 is completed, the processing flow returns to the caller of the processing.

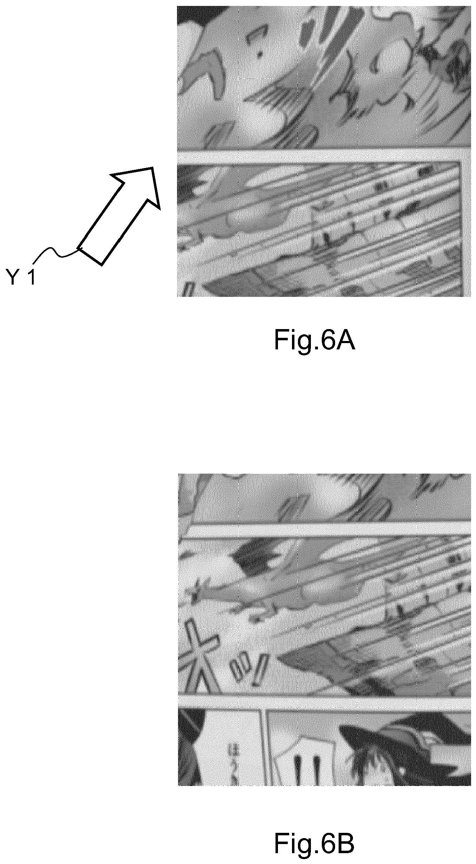

Figs. 6A and 6B are views illustrating an example of how the content of the book is displayed when the content is displayed in an enlarged manner. Fig. 6A illustrates a state where the user tries to slide, for example, the finger over the screen in the direction of the arrow Y1 with the content displayed in the enlarged manner. Fig. 6B illustrates a state where the aforementioned sliding of the finger is completed.

In this case, an operation of page turning or turning of the book as described later is not performed and instead the portion of the magnified content which is displayed is moved. Specifically, in this case, the display state is recognized to be a state in which the content is displayed at a predetermined magnification ratio or more. In this case, the portion of the magnified content which is displayed can be slid and displayed by performing, for example, the operation of sliding the finger over the screen. Note that the same display control may be executed by performing a drag operation of a mouse instead of the operation of sliding the finger.

This can prevent display changes unexpected by the user such as an operation of page turning executed while the user is viewing the content with the content enlarged. Since the user naturally desires to view the magnified content which is displayed together with their surroundings, performing such display control can improve the convenience of the user.

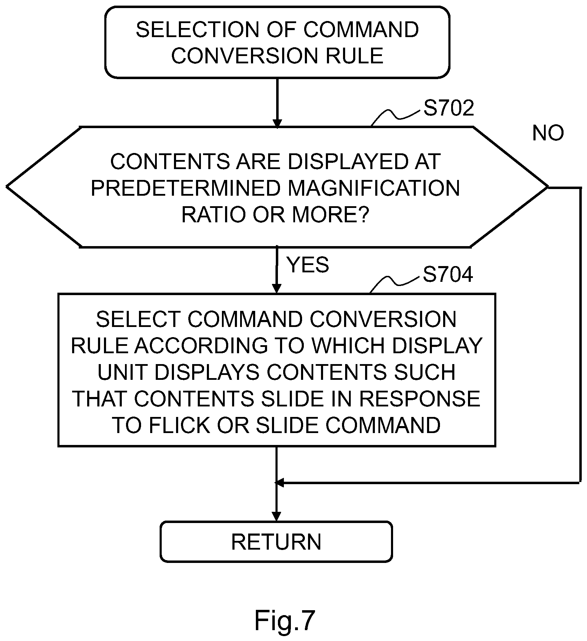

Fig. 7 illustrates a flow of the processing described in Figs. 6A and 6B. Specifically, Fig. 7 is a flowchart of the processing performed when the content of the book is displayed at the predetermined magnification ratio or more.

[S702] The book display program checks whether the content is displayed at the predetermined magnification ration ratio or more. When the result of this check is YES, the processing flow proceeds to step S704. When the result of this check is NO, the processing flow returns to the caller of the processing.

[S704] Since the content is displayed at the predetermined magnification ratio or more, the book display program selects, for example, the command conversion rule according to which the content is slid and displayed in response to flick or slide command on the display screen. The display screen thereby slides depending on the movement of the finger and another portion of the content is displayed on the display screen. Note that the command is not limited to flick and slide and may be dragging with the mouse. Alternatively, the command may be pressing of an arrow key.

When this processing is completed, the processing flow returns to the caller of the processing.

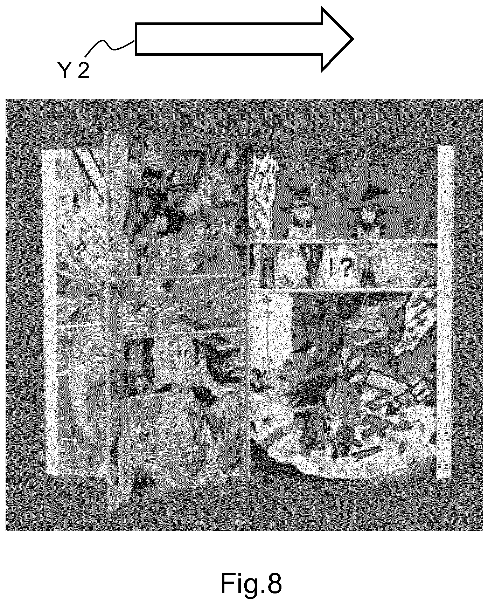

Fig. 8 is a view illustrating an example of how the page turning is displayed when the book is displayed substantially as a spread. In the spread state, the user views both of the left and right pages. Accordingly, for example, when the user swipes the screen in the direction of the arrow Y2, as illustrated in Fig. 8, a page is displayed and turned from left to right and an action of page turning is displayed. Note that the command made by the user is not limited to swipe and may be flick, tap, clicking of the mouse, dragging with the mouse, voice, or the like. Moreover, the command may be made by generating noise by tapping the housing with the finger and detecting this noise with a microphone of the device. These actions are examples of the command and the command is not limited to these actions.

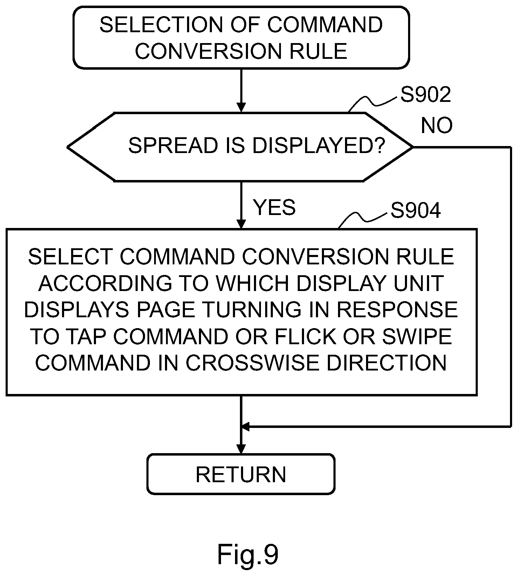

Fig. 9 is a flowchart of processing of the page turning performed when the book is displayed as a spread.

[S902] The book display program checks whether the display image of the book on the display screen is a display image of a spread in which the left and right pages of the book are substantially entirely visible. When the result of this check is YES, the processing flow proceeds to step S904. When the result of this check is NO, the processing flow returns to the caller of the processing.

[S904] The book display program selects the command conversion rule according to which the page turning is displayed in response to a tap command or the flick or swipe command in the crosswise direction.

When this processing is completed, the processing flow returns to the caller of the processing.

When the user gives an instruction by giving the tap command or the flick or swipe command in the crosswise direction while the left and right pages of the book are substantially entirely displayed, it is highly likely that this instruction is the instruction of page turning. Accordingly, the page turning is displayed by the aforementioned processing. The convenience of the user can be thus improved.

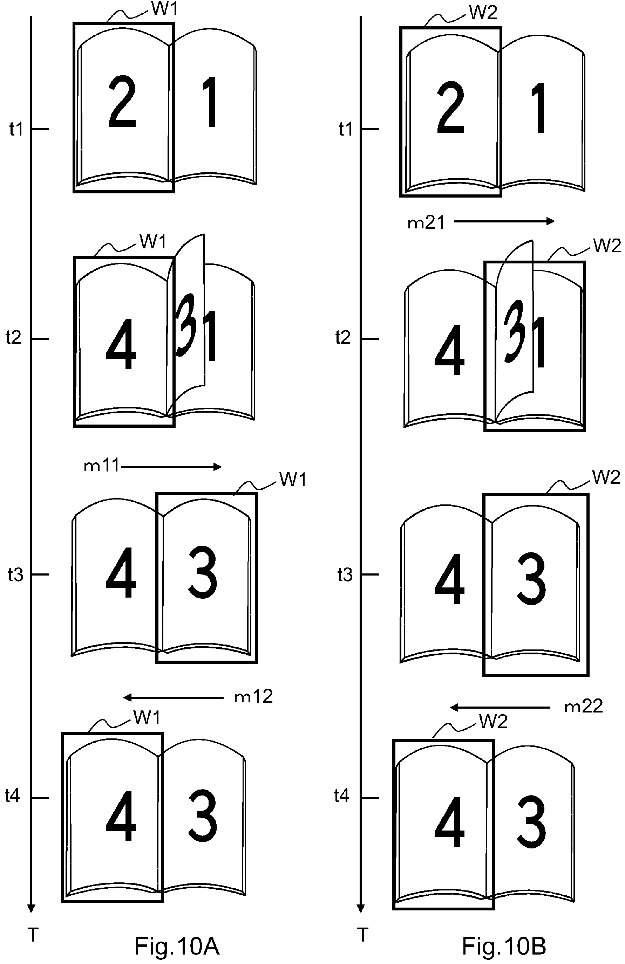

Figs. 10A and 10B are views illustrating an example of page display control performed when one page is displayed on a portrait-oriented display device.

At a terminal with a portrait-oriented display screen such as a mobile terminal, reading of a book can be made easier for the user by substantially entirely displaying one of the left and right pages of the book and not displaying or partially displaying the other page, rather than displaying the book as a spread.

However, it was found that, when the book is virtually three-dimensionally displayed, efforts to make the reading of the book easier for the user need to be made among the displaying of one page, the page turning, and smooth movement of the display region. The example described below is an example of display control.

Fig. 10A is a view schematically illustrating at which one of time points t1 to t4 each of the left and right pages is displayed in a window W1 and the page turning operation is performed.

Fig. 10B illustrates an example of a processing flow in which the timings are different from those in Fig. 10A.

First, the processing flow of Fig. 10A is described. Window W1 denotes a window region displayed on the display screen of the mobile terminal or the like. Moreover, the pages of the book are denoted by numbers in the order of the pages to facilitate understanding.

At the time point t1, page 2 is displayed in the window W1. Assume that the book display device receives the page turning command from the user in this case.

At the time point t2, the page turning processing is performed. When the position of the window W1 is not moved in this case, page 4 is displayed in the window W1.

At the time point t3, the window W1 is smoothly moved in the direction m11 and page 3 is displayed in the window W1.

At the time point t4, the window W1 is smoothly moved in the direction m12 and page 4 is displayed in the window W1.

In the series of processes described above, the user views the pages in the order of page 2, page 4, page 3, and page 4 and page 4 is consequently displayed before page 3. The order of reading by user is thereby disturbed.

Next, the processing flow of Fig. 10B is described.

Window W2 denotes the window region displayed on the display screen of the mobile terminal or the like. Moreover, the pages of the book are denoted by numbers in the order of the pages to facilitate understanding.

At time point t1, page 2 is displayed in the window W2. Assume that the book display device receives the page turning command from the user in this case.

At the time point t2, the page turning processing is performed. In this case, the position of the window W2 is smoothly moved in the direction m21. Both of part of page 1 and page 3 in the middle of the page turning are displayed in the window W2.

At the time point t3, entire page 3 is displayed in the window W2.

At the time point t4, the window W2 is smoothly moved in the direction m22 and page 4 is displayed in the window W2.

In the series of processes described above, the user views the pages in the order of page 2, page 3 in the middle of page turning (and part of page 1), page 3, and page 4. Accordingly, it is possible to avoid the case where page 4 is displayed before page 3. This can sufficiently reduce the disruption to the order of reading by the user.

As described above, the processing of Fig. 10B achieves the displaying of one page, the page turning, and the smooth movement of the display region when the book is virtually three-dimensionally displayed.

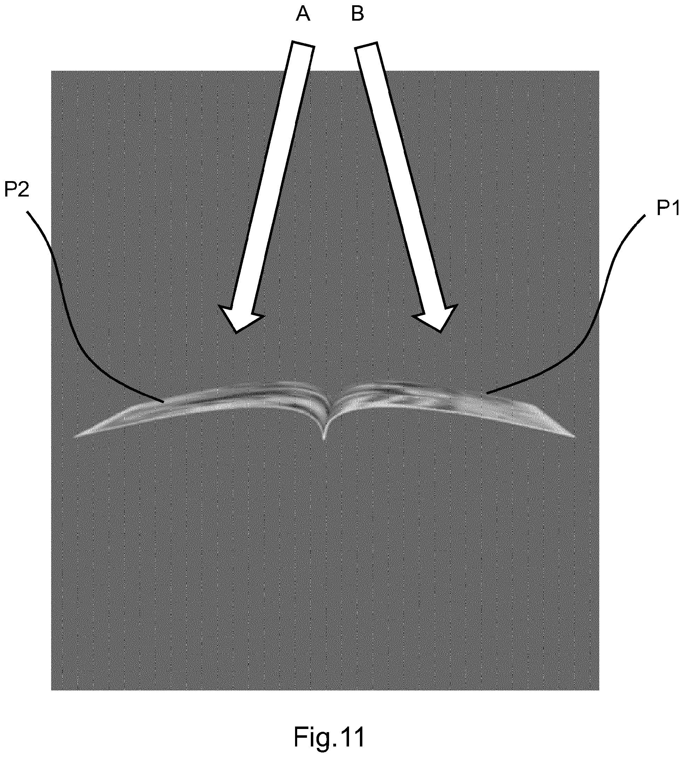

Fig. 11 is a view illustrating an example of a direction of a virtual line of sight in the case where one page is displayed. Although the book is illustrated in a spread form in Fig. 11, assume that one of the left and right pages is mainly displayed on the display screen.

When the page P1 is to be mainly displayed on the display screen, it is desirable that a three-dimensional image obtained based on the virtual line of sight B is displayed. This allows the content in a curved portion near a boundary between the left and right pages of the book to be displayed in a manner easily recognizable by the user.

Similarly, when the page P2 is to be mainly displayed on the screen, it is desirable that a three-dimensional image obtained based on the virtual line of sight A is displayed. This allows the content in a curved portion near the boundary between the left and right pages of the book to be displayed in a manner easily recognizable by the user.

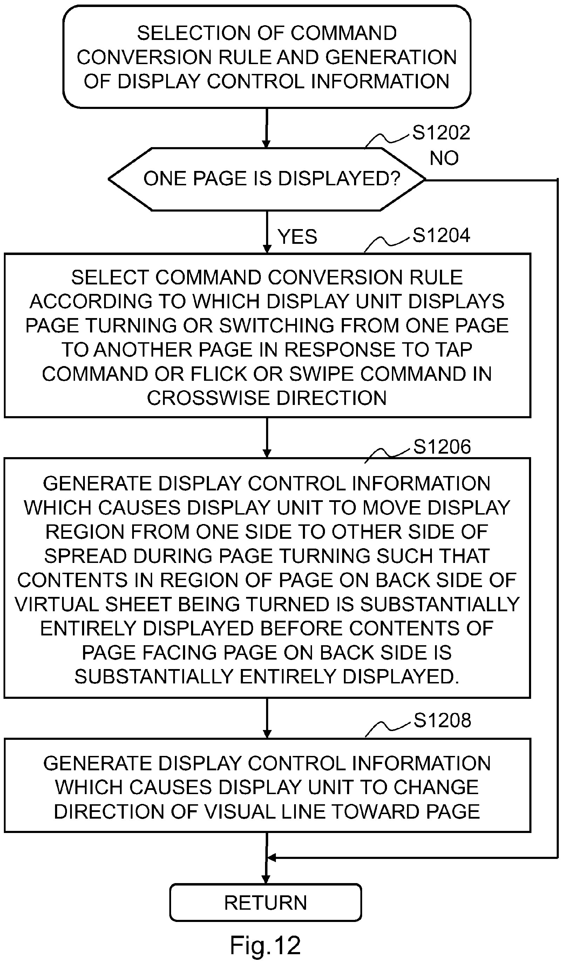

Fig. 12 is a flowchart illustrating an example of processing in page turning performed when one page is displayed on the screen.

[S1202] The book display program checks whether the one page is mainly substantially entirely displayed. When the result of the check is YES, the processing flow proceeds to step S1204. When the result of the check is NO, the processing flow returns to the caller of the processing.

[S1204] The book display program selects the command conversion rule according to which the page turning or switching from one page to another page is displayed in response to the tap command or the flick or swipe command in the left-right direction. Note that the command of turning the page forward or backward is not limited to these commands. The processing flow proceeds to step S1206.

[S1206] In the case of the page turning, the book display program selects the command conversion rule according to which the display region is moved from one side to the other side of a spread during the page turning such that the content in a region of a page on the back side of a virtual sheet being turned is substantially entirely displayed before the content of a page facing the page on the back side is substantially entirely displayed. This processing describes the processing illustrated in Fig. 10B.

Note that sliding the window W2 from one page to the other page of a spread allows a page not displayed yet out of the pages of the spread to be displayed. In this case, no page turning processing is performed as a matter of course. The processing flow proceeds to step S1208.

[S1208] The book display program selects a command conversion rule according to which the direction of viewing the page is changed. Specifically, it is desirable to change the direction of the virtual line of sight as illustrated in Fig. 11 depending on which one of the left and right pages is displayed.

The aforementioned processing enables execution of display processing which makes it easier for the user to view the book when one page is displayed on the portrait-oriented display screen of the mobile terminal or the like.

When this processing is completed, the processing flow returns to the caller of the processing.

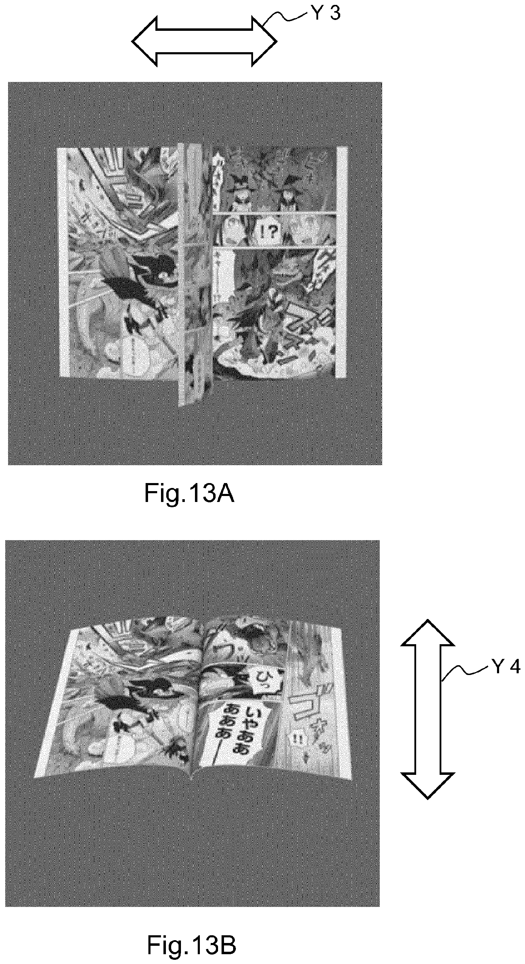

Figs. 13A and 13B are views illustrating an example of a user interface used when an instruction of the page turning is given and when the book is displayed to be turned.

Fig. 13A illustrates an example of processing in which the page turning (when one page is displayed, moving of the display region to the next or previous page) is performed, for example, when the user performs swipe or flick on the screen in a substantially horizontal direction as illustrated by the arrow Y3.

Fig. 13B illustrates an example of processing in which turning the book is displayed, for example, when the user performs swipe or flick on the screen in a substantially vertical direction as illustrated by the arrow Y4 (and then slides the finger over the screen without removing it from the screen).

The instruction of page turning and the instruction of turning the display image of the entire book can be thus distinguished by giving the flick or swipe command in the substantially horizontal direction or the substantially vertical direction as described above.

Instructions for various types of processing on the book can be thereby given by using a very simple user interface.

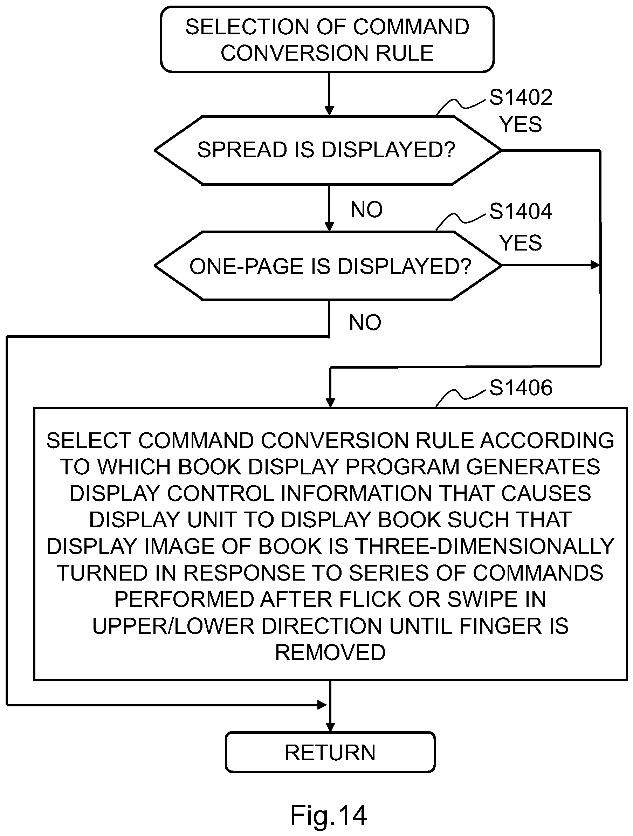

Fig. 14 is a flowchart illustrating an example of processing of displaying the book such that the book is three-dimensionally turned.

[S1402] The book display program checks whether the book is displayed in the spread state. When the result of the check is YES, the processing flow proceeds to step S1406. When the check result is NO, the processing flow proceeds to step S1404.

[S1404] The book display program checks whether the book is in the one-page display state. When the result of the check is YES, the processing flow proceeds to step S1406. When the result of the check is NO, the processing flow returns to the caller of the processing.

[S1406] The book display program selects the command conversion rule according to which the book is displayed such that the display image of the book is three-dimensionally turned in response to a series of commands inputted after the flick or swipe in the up-down direction until the finger is removed. This processing is the processing illustrated in Fig. 13B.

When this processing is completed, the processing flow returns to the caller of the processing.

Note that, since the processing illustrated in Fig. 13A is already explained, description thereof is omitted.

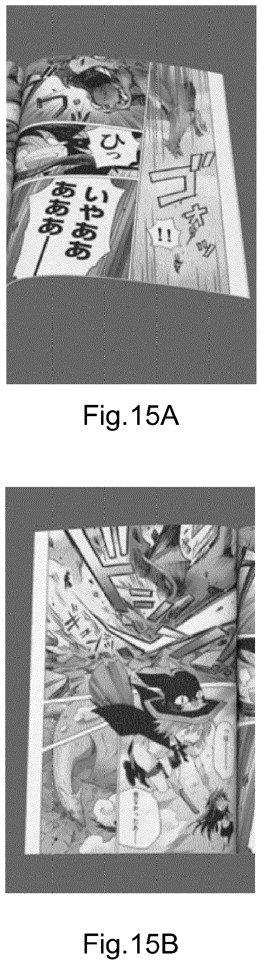

Figs. 15A and 15B are views illustrating an example of processing performed when the previous or next page of one page is to be displayed in a situation where the one page is displayed as viewed along a line of sight extending in a tilted direction.

It is often difficult for the user to recognize the content on the display screen displaying one page as viewed along a line of sight extending in a tilted direction. Accordingly, in moving to another page such as page turning and parallel moving to another page, it is desirable to change (return) a display image of the page after the moving to an image as viewed along the line of sight extending in a direction substantially perpendicular to the sheet surface.

Fig. 15A illustrates an image of one page as viewed in the tilted direction. In this case, when the display image is to be changed to the previous or next page, as illustrated in Fig. 15B, the display image is changed (returned) to an image of a certain magnification ratio as viewed along the line of sight extending in a direction substantially perpendicular to the sheet surface. The user can thereby view one page displayed on the screen in a way easy to view.

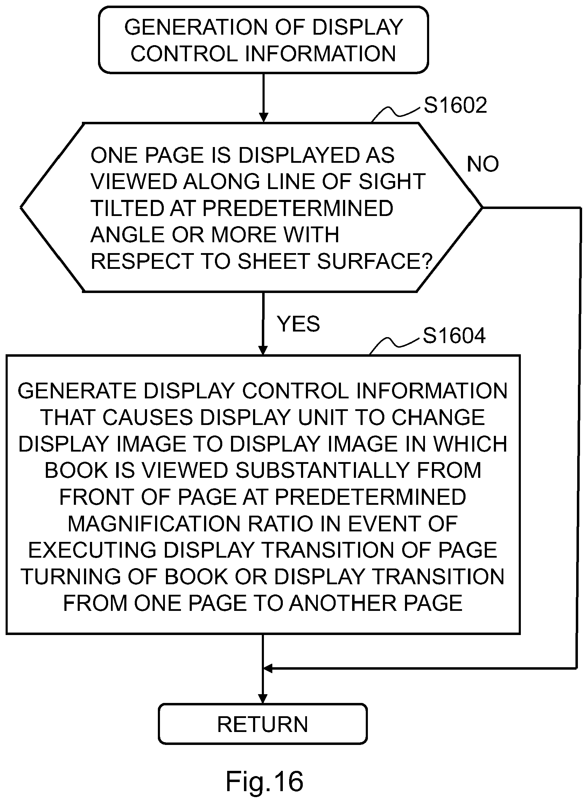

Fig. 16 is a flowchart illustrating an example of the processing performed when the previous or next page of one page is to be displayed in the situation where the one page is displayed as viewed along the line of sight extending in the tilted direction as in the example of Figs. 15A and 15B.

[S1602] The book display program checks whether one page is displayed as viewed along a line of sight tilted at a predetermined angle or more with respect to the sheet surface. When the result of the check is YES, the processing flow proceeds to step S1604. When the result of the check is NO, the processing flow returns to the caller of the processing.

[S1604] The book display program selects a command conversion rule according to which the display image of the book is changed to a display image in which the book is viewed substantially from the front of the page at a predetermined magnification ratio in an event of executing display transition of the page turning of the book or display transition from one page to another page.

When this processing is completed, the processing flow returns to the caller of the processing.

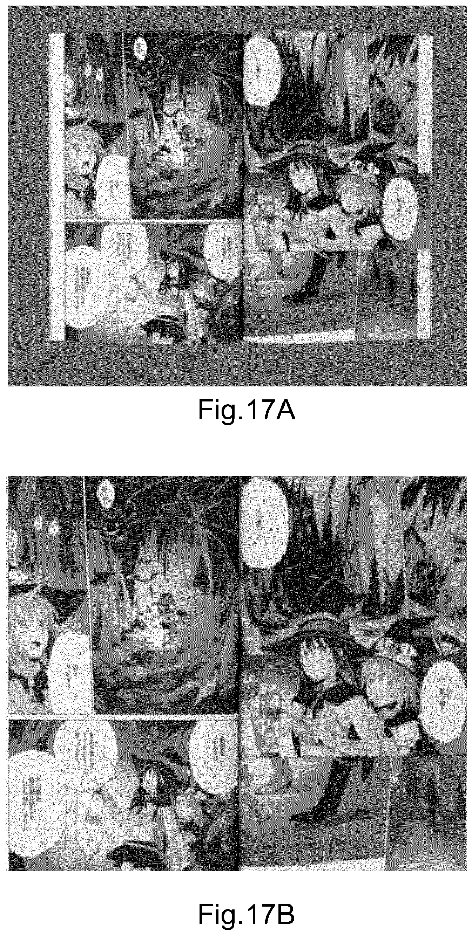

Figs. 17A and 17B are views illustrating examples of the case where the entire book is displayed and the case where the portion of the content of the book is substantially entirely displayed.

In Fig. 17A, the book is displayed on the screen with some extra space to include surroundings of the book. However, some users desire to view the content substantially entirely with the content displayed as large as possible by aligning the edges of the content almost exactly with the edges of the screen or by displaying the content with the edges thereof located slightly outside the screen as illustrated in Fig. 17B. In the case where such magnification ratio is set, it is desirable to perform processing which does not change the set magnification ratio when the operation of switching the page (page turning and sliding from one page to another page) is performed.

Accordingly, it is desirable to store a range of magnification ratio as described above in advance and, when the magnification ratio is set within this range, maintain the set magnification ratio in an event of performing the page switching processing. The book can be thereby displayed in a way easy for the user to read with the magnification ratio preferred by the user maintained.

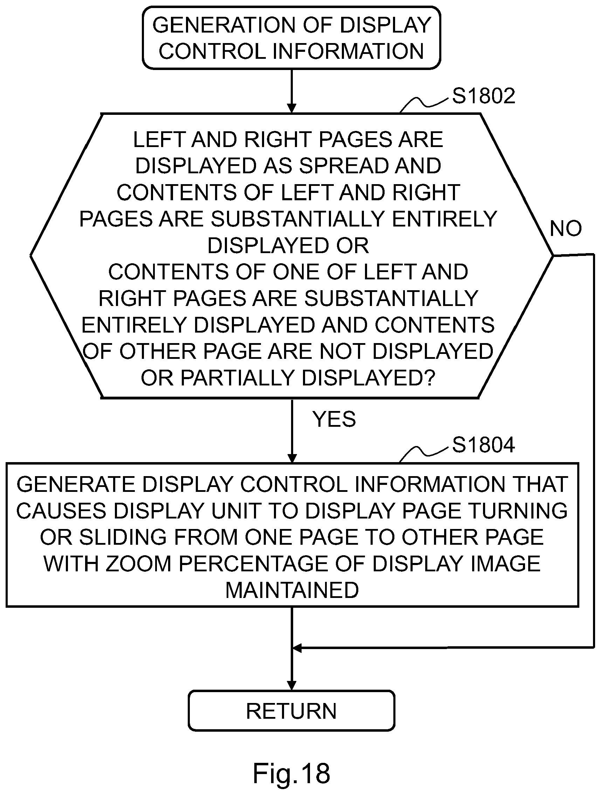

Fig. 18 is a flowchart illustrating an example of the processing of displaying the previous or next page when the portion of the content of the book is substantially entirely displayed.

[S1802] The book display program checks whether the left and right pages are displayed as a spread and the content of the left and right pages is substantially entirely displayed within the predetermined range of magnification ratio or checks whether the content of one of the left and right pages is substantially entirely displayed and the content of the other page is not displayed or is partially displayed within the predetermined range of magnification ratio. When the result of the check is YES, the processing flow proceeds to step S1804. When the result of the check is NO, the processing flow returns to the caller of the processing.

[S1804] The book display program selects the command conversion rule according to which the page turning or sliding from one page to the other page is displayed with the magnification ratio of the display image maintained.

When this processing is completed, the processing flow returns to the caller of the processing.

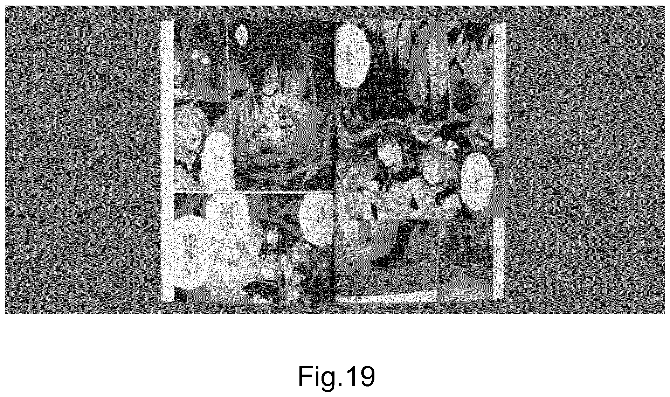

Fig. 19 is a view illustrating an example of a mode in which the book is displayed as a spread on the landscape-oriented display screen. For example, assume a case where a mobile terminal with a rectangular screen is held in a landscape-oriented position. Employing a mode in which only one page is displayed in this case results in which only part of the display screen to be used. Moreover, displaying only one page in spite of presence of extra spaces in the display region makes the book difficult for the user to view.

Accordingly, it is desirable to employ a mode in which the book is displayed as a spread in hardware with such a landscape-oriented screen.

Moreover, there may be a case where a terminal with a rectangular screen is turned to switch from a state where the screen is in the portrait-oriented position to a state where the screen is in the landscape-oriented position. In this case, if the mode employed in the portrait-oriented position is the mode of displaying one page, it is desirable to change the mode to the spread mode when the screen is switched to the landscape-oriented position.

A mode in which the user can easily read the book is thereby automatically selected.

Moreover, when the user turns the screen to the portrait-oriented position while the book is displayed as a spread on the screen in the landscape-oriented position, the mode may be switched to the mode of displaying one page. Alternatively, the configuration may be such that the user can set whether the mode is changed to the mode of displaying one page or maintained in the mode of double-page spread in initial settings.

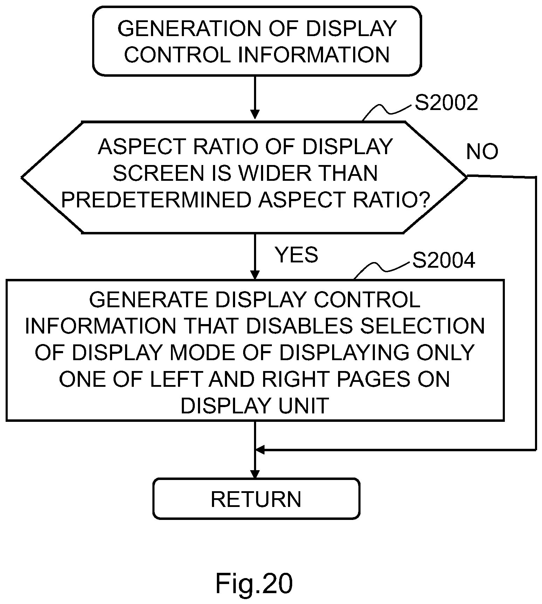

Fig. 20 is a flowchart illustrating an example in which the mode is switched to the mode of double-page spread depending on detection of the aspect ratio of the display screen as illustrated in Fig. 19.

[S2002] The book display program checks whether the display screen has a long width with the aspect ratio is wider than a predetermined aspect ratio. When the result of the check is YES, the processing flow proceeds to step S2004. When the result of the check is NO, the processing flow returns to the caller of the processing.

[S2004] The book display program generates the display control information that disables selection of the display mode of displaying only one of the left and right pages on the display unit.

When this processing is completed, the processing flow returns to the caller of the processing.

Note that, when the user turns the terminal from a landscape display mode to a portrait display mode, the processing as described with reference to Fig. 19 is performed. Description of the flow of this processing is thus omitted.

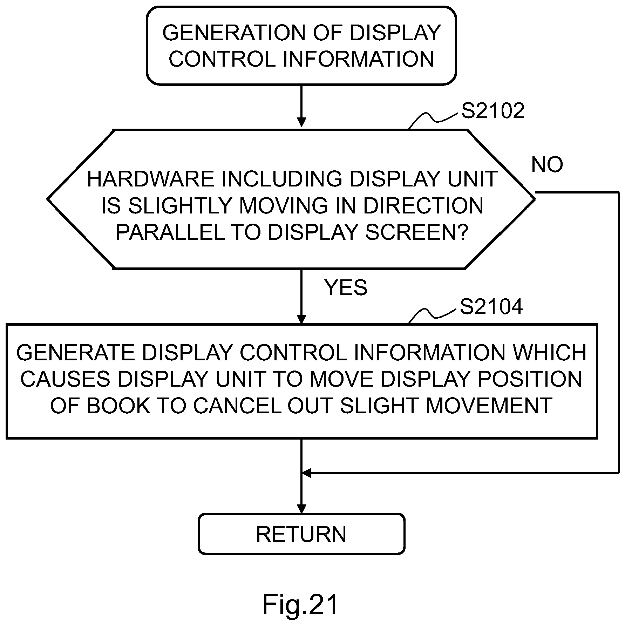

Fig. 21 is a flowchart illustrating an example of display control performed when the mobile terminal or the like is moving substantially parallel to the screen.

When the user is on a train or the like and the mobile terminal or the like is slightly moving parallel to the screen, the screen is sometimes difficult to view. Whether the screen is difficult to view varies depending on the amplitude, frequency, and the like of vibration. When the frequency of the vibration is low, the visibility of the screen often does not decrease. Moreover, when the amplitude is large, the body tends to move together with the mobile terminal or the like and thus the visibility of the screen often does not decrease.

Accordingly, it is desirable to set in advance whether to move the image displayed on the screen to cancel out the vibration of the screen or not, depending on the frequency and the amplitude of the vibration. Setting information includes ranges of the frequency and amplitude of the vibration and the like.

A display image easier for the user to view can be thereby achieved.

[S2102] The book display program checks whether the hardware including the display unit is slightly moving in a direction parallel to the display screen. When the result of the check is YES, the processing flow proceeds to step S2104. When the result of the check is NO, the processing flow returns to the caller of the processing. Note that, in this determination, it is desirable to set the ranges of the frequency and amplitude of the vibration in advance.

[S2104] The display position of the book is moved to cancel out the slight movement.

When this processing is completed, the processing flow returns to the caller of the processing.

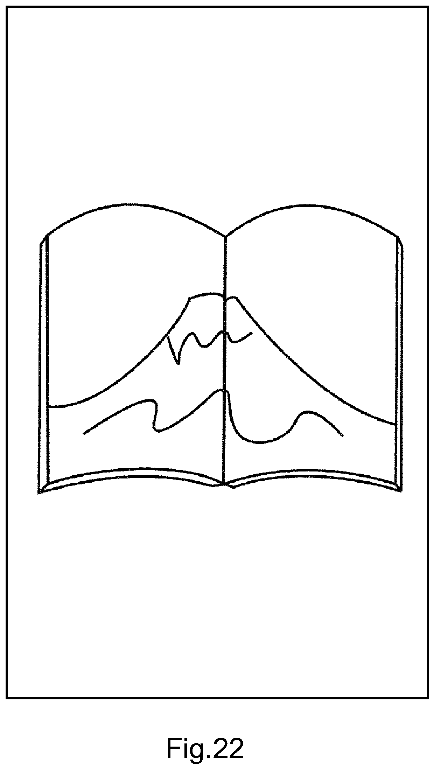

Fig. 22 is a view illustrating an example of displaying the book in the double-page spread mode when the content spanning across the left and right pages is displayed. The content including an image of a mountain is displayed to span across the left and right pages as a spread.

When the book includes the content spanning across the left and right pages as described above, it is desirable to display the book in the spread mode.

In this case, the content may include a flag indicating that the book includes the content spanning across the left and right pages. Alternatively, the book display program may recognize that the book includes a content spanning across the left and right pages by means of pattern recognition.

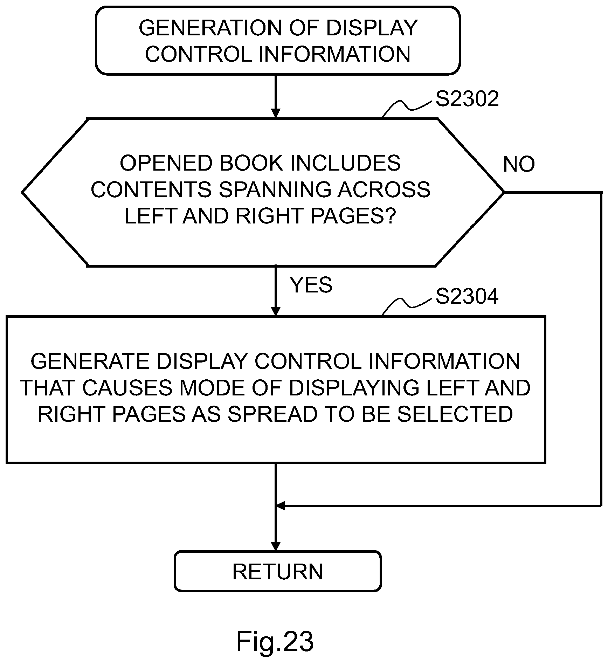

Fig. 23 is a flowchart illustrating an example of displaying the book in the double-page spread mode when the content spanning across the left and right pages is displayed.

[S2302] The book display program checks whether the opened book includes a content spanning across the left and right pages. When the result of the check is YES, the processing flow proceeds to step S2104. When the result of the check is NO, the processing flow returns to the caller of the processing.

[S2304] The book display program generates the display control information that causes the mode of displaying the left and right pages as a spread to be selected.

When this processing is completed, the processing flow returns to the caller.

As described above, processing of displaying a virtual book with excellent convenience for the user can be thereby achieved.

### [Reference Signs List]

- 102: display unit
- 104: content state recognizer
- 106: display control information generator
- 108: hardware state recognizer
- 110: command receiver
- 112: command conversion rule selector
- 114: display state obtainer

## Claims

1. A book display program which causes a computer to execute instructions comprising:
receiving a command to change a display image of a virtual book displayed on a display unit from an operator, wherein the book including a content;
generating a display control information to be applied to the display unit and used to control transition of the display image of the book; and
three-dimensionally or two-dimensionally displaying the book based on the display control information, wherein
the generating the display control information includes:
obtaining a display state of the book; and
selecting one of command conversion rules based on at least the display state, wherein the one command conversion rule selected is applied to the received command and used to generate the display control information.

2. The book display program according to claim 1, which causes the computer to execute instructions further comprising recognizing a state of the content, wherein
the generating the display control information generates the display control information by also using the recognized state of the content.

3. The book display program according to claims 1 or 2, which causes the computer to execute instructions further comprising recognizing a state of a hardware included in a device configured to display the book, wherein
the generating the display control information generates the display control information by also using the recognized state of the hardware.

4. The book display program according to any one of claims 1 to 3, wherein when the display state indicates that the book is displayed at a predetermined magnification ratio or more, the selecting one of command conversion rules includes selecting the command conversion rule according to which the book display program generates the display control information that causes the content to be slid and displayed in response to a flick/swipe command.

5. The book display program according to any one of claims 1 to 3, wherein when the display state indicates that left and right pages of the book are displayed as a spread, the selecting one of command conversion rules includes selecting the command conversion rule according to which the book display program generates the display control information that causes display transition of page turning of the book to be performed in response to a tap command or a flick/swipe command in a crosswise direction.

6. The book display program according to any one of claims 1 to 3, wherein when the display state indicates that the content of one of left and right pages of the book is substantially entirely displayed and the content of the other page is not displayed or is partially displayed, the selecting one of command conversion rules includes selecting the command conversion rule according to which the book display program generates the display control information that causes display transition of page turning of the book or display transition from the one page to the other page to be executed in response to a tap command or a flick/swipe command in a crosswise direction.

7. The book display program according to any one of claims 1 to 3, wherein when the display state indicates that the content of one of left and right pages of the book is substantially entirely displayed and the content of the other page is not displayed or is partially displayed, the selecting one of command conversion rules includes selecting the command conversion rule according to which the book display program generates the display control information that causes display transition of page turning of the book or display transition from the one page to the other page to be executed in response to a tap command or a flick/swipe command in a crosswise direction and that causes a direction of viewing the page mainly displayed after the execution of the display transition to be changed to reduce difficulty in viewing a side portion of the content in the page due to curving of the page.

8. The book display program according to any one of claims 1 to 3, wherein when the display state indicates that left and right pages of the book are displayed as a spread or that the content of one of the left and right pages is substantially entirely displayed and the content of the other page is not displayed or is partially displayed, the selecting one of command conversion rules includes selecting the command conversion rule according to which the book display program generates the display control information that causes the book to be displayed such that the display image of the book is three-dimensionally turned in response to a series of commands inputted after flick or swipe in an upper/lower direction until finger is removed.

9. The book display program according to any one of claims 1 to 3, wherein when the display state indicates that the content of one of left and right pages of the book is substantially entirely displayed and the content of the other page is not displayed or is partially displayed and that the book is displayed as viewed along a line of sight tilted at a predetermined angle or more with respect to a plane parallel to a cover of the book, the selecting one of command conversion rules includes selecting the command conversion rule according to which the book display program generates the display control information that causes display transition of page turning of the book or display transition from the one page to the other page is executed in response to a tap command or a flick/swipe command in a crosswise direction and causes the display image of the book to be changed to an image in which the book is viewed from substantially front of a page at a predetermined magnification ratio.

10. The book display program according to any one of claims 1 to 3, wherein when the display state indicates that the content of one of left and right pages of the book is substantially entirely displayed and the content of the other page is not displayed or is partially displayed, the selecting one of command conversion rules includes selecting the command conversion rule according to which the book display program generates the display control information that causes the book to be displayed such that, when the command is a command to execute display transition of page turning, a display region is moved from one side to the other side of a spread in a middle of page turning such that the content of a page on the back side of a virtual sheet including a turned page is substantially entirely displayed before the content of a page facing the page on the back side is substantially entirely displayed.

11. The book display program according to any one of claims 1 to 3, wherein when the display state indicates that left and right pages of the book are displayed as a spread and the content of the left and right pages is substantially entirely displayed or that the content of one of the left and right pages is substantially entirely displayed and the content of the other page is not displayed or is partially displayed, the selecting one of command conversion rules includes selecting the command conversion rule according to which the book display program generates the display control information that causes display transition of page turning of the book or display transition from one page to the other page is executed in response to a tap command or a flick/swipe command in a crosswise direction with a magnification ratio of the display image of the book maintained.

12. The book display program according to claim 2, wherein when the state of the content indicates that the book includes a portion of the content spanning across opened left and right pages of the book, the generating the display control information generates the display control information such that the left and right pages are displayed in a spread state.

13. The book display program according to claim 3, wherein when the state of the hardware indicates that a display screen has a long width with an aspect ratio wider than a predetermined aspect ratio, the generating the display control information generates the display control information that disables selection of a display mode of displaying only one of left and right pages of the book on the display unit.

14. The book display program according to claim 3, wherein when the state of the hardware indicates that slight movement of the hardware in a direction parallel to a plane of a display screen, the generating the display control information generates the display control information that causes a display position of the book to be moved such that the slight movement is canceled out.

15. A book display device comprising:
a command receiver configured to receive a command to change a display image of a virtual book displayed on a display unit from an operator, wherein the book including a content;
a display control information generator configured to generate a display control information to be applied to the display unit and used to control transition of the display image of the book; and
the display unit configured to three-dimensionally or two-dimensionally display the book based on the display control information, wherein
the display control information generator includes:
a display state obtainer configured to obtain a display state of the book; and
a command conversion rule selector configured to select one of command conversion rules based on at least the display state, wherein the one command conversion rule selected is applied to the received command and used to generate the display control information.
